# EUROPÄISCHE PATENTSCHRIFT

(11) **EP 2 419 239 B1**
(45) Veröffentlichungstag und Bekanntmachung des Hinweises auf die Patenterteilung: **12.12.2012**
(21) Anmeldenummer: 11731338.7
(22) Anmeldetag: 08.07.2011
(51) Int. Cl.: B23P 19/04, B60J 10/00, B62D 65/06

(54) **VERFAHREN ZUR MONTAGE EINES STRANGPROFILS**
METHOD FOR INSTALLING A PROFILED EXTRUDED SECTION
PROCÉDÉ DE MONTAGE D'UN PROFILÉ EXTRUDÉ

(30) Priorität: 09.07.2010 DE 102010026669
(43) Veröffentlichungstag der Anmeldung: 22.02.2012
(73) Patentinhaber: METZELER Automotive Profile Systems GmbH, 88131 Lindau (DE)
(72) Erfinder: DEUSCHER, Oliver, 72829 Engstringen (DE); CASTAGNOLA, Luciano, 73733 Esslingen (DE); HIEBER, Steffen, 70563 Stuttgard (DE); SCHUCK, Manfred, 71067 Sindelfingen (DE)
(74) Vertreter: Schober, Christoph D.
(86) Internationale Anmeldenummer: PCT/EP2011/061667
(87) Internationale Veröffentlichungsnummer: WO 2012/004394

(56) Entgegenhaltungen:
- EP-A1- 0 857 599
- DE-A1-102005 028 069

## Beschreibung

Die Erfindung betrifft ein Verfahren zur Montage eines Strangprofils an einer Fahrzeugkarosserie oder einem Fahrzeugbauteil nach dem Oberbegriff des Patentanspruchs 1, wie es beispielsweise aus der gattungsbildenden EP 1 733 839 A1 als bekannt hervorgeht.

Die EP 1 733 839 A1 beziehungsweise DE 10 2005 028 060 A1 offenbaren ein Verfahren zur Bildung einer Dichtung oder Abdeckung an einem Bauteil, insbesondere einer Fahrzeugtür oder einem Türausschnitt einer Fahrzeugkarosserie. Bei diesem Verfahren wird ein die Dichtung oder Abdeckung bildendes Strangmaterial nach seiner Herstellung zunächst einer Qualitätsprüfung unterzogen, bei der fehlerhafte Abschnitte markiert werden; das auf diese Weise geprüfte und markierte Strangmaterial wird anschließend auf eine Rolle aufgerollt. Beim Fahrzeughersteller wird das geprüfte und markierte Strangmaterial von der Rolle abgewickelt; das abgewickelte Strangmaterial wird dem Bauteil zugeführt, in Stranglängsrichtung fortlaufend mit dem Bauteil verbunden und ein der Länge der Dichtung entsprechender Endabschnitt von dem zugeführten Strangmaterial abgetrennt. Dabei wird das von der Rolle abgewickelte Strangmaterial vor der Verbindung mit dem Bauteil geprüft, um die als fehlerhaft gekennzeichneten Abschnitte zu erkennen. Diese als fehlerhaft markierten Abschnitte des Strangmaterials werden abgetrennt und als Abfall ausgesondert.

Dieses Verfahren ermöglicht die Applikation fehlerfreien Strangmaterials auf ein Bauteil, erfordert jedoch beim Fahrzeughersteller einen hohen Aufwand, da das Strangmaterial kontinuierlich auf Fehlermarkierungen geprüft werden muss.

Darüber hinaus ist aus EP 0 857 599 A1 ein Verfahren zur Anordnung eines Dichtstreifens an einem Flansch einer Schiebedachöffnung oder ähnlichen Karosserieöffnung bekannt, bei dem mittels eines Sensors eine Schneideinrichtung aktiviert wird, um die für eine Applikation ungeeigneten Abschnitte des Dichtstreifens abzutrennen.

Es ist daher Aufgabe der vorliegenden Erfindung, ein Verfahren zur Montage eines Strangprofils an einer Fahrzeugkarosserie oder einem Fahrzeugbauteil bereitzustellen, welches beim Fahrzeughersteller einen geringeren Aufwand verursacht.

Diese Aufgabe wird durch ein Verfahren mit den Merkmalen des Patentanspruchs 1 gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren werden Dichtungsprofile, Kantenschutzprofile oder dergleichen, die aus einem Strangmaterial gebildet sind, an Fahrzeugkarosserien oder Fahrzeugbauteilen montiert. Dabei wird das Strangmaterial von einer Spule abgewickelt, und Längenabschnitte des Strangmaterials werden sequentiell von dem abgewickelten Strangmaterial abgetrennt. Diese Längenabschnitte werden als Dichtungsprofile, Kantenschutzprofile oder dergleichen an den Fahrzeugkarosserien oder den Fahrzeugbauteilen montiert. Im Folgenden soll der Begriff "Dichtungsprofil" nicht nur Dichtungsprofile im eigentlichen Sinne des Wortes, sondern auch Kantenschutzprofile und dergleichen mit umfassen.

Erfindungsgemäß ist vorgesehen, dass das Strangmaterial in einer solchen Weise bereitgestellt wird, dass das Strangmaterial fehlerfreie Nutzabschnitte einer vorgegebenen Nutzlänge umfasst, zwischen denen Zwischenabschnitte einer vorgegebenen Zwischenlänge angeordnet sind. Das Strangmaterial besteht also aus fehlerfreien Nutzabschnitten, zwischen denen in periodischen Abständen Zwischenabstände mit einer vordefinierten Länge angeordnet sind. Im Zuge der Montage der Dichtungsprofile werden die Zwischenabschnitte aus dem Strangmaterial herausgetrennt und als Ausschuss ausgesondert. Es werden also nur die (als fehlerfrei bekannten) Nutzabschnitte für die Dichtungsmontage verwendet, die Zwischenabschnitte (die Fehler, Defekte etc. enthalten können) werden als Ausschuss entsorgt.

Bevor das Strangmaterial beim Fahrzeughersteller von der Spule abgewickelt und auf die Fahrzeugkarosserie bzw. das Fahrzeugbauteil montiert wird, wird das Strangmaterial in der oben beschriebenen Weise konfektioniert. Dies geschieht in der Regel vor dem Aufwickeln des Strangmaterials auf die Spule und wird in der Regel durch den Lieferanten des Strangmaterials durchgeführt. Hier wird das Strangmaterial zunächst geprüft, und es werden Abschnitte von einer der Nutzlänge entsprechenden Länge (oder einem Vielfachen der Nutzlänge) hergestellt, die in einer solchen Weise aneinandergefügt werden, dass sich die Stöße im Bereich der Zwischenabschnitte befinden. Fehlerhafte Bereiche werden - im Unterschied zu der technischen Lehre der EP 1 733 839 A1 - nicht markiert, sondern das Strangmaterial wird stattdessen derart konfektioniert, dass Bereiche des Strangmaterials, welche außerhalb des geschilderten Toleranzfeldes liegen und damit von dem gewünschten Zustand abweichen, entweder herausgeschnitten werden oder in den Zwischenabschnitten des Strangmaterials positioniert werden, bevor das Strangmaterial auf die Rolle aufgespult wird. Beim Fahrzeughersteller erfolgt - entgegen der technischen Lehre der der EP 1 733 839 A1 - kein Abtrennen fehlerhafter Abschnitte anhand von Markierungen, sondern es werden periodisch in fest vordefinierten Abständen Zwischenabschnitte einer fest vorgegebenen Zwischenlänge abgetrennt, unabhängig davon, ob diese Zwischenabschnitte fehlerbehaftet sind oder nicht.

Das erfindungsgemäße Verfahren vermeidet somit eine Prüfung des Strangmaterials beim Fahrzeughersteller, d.h. im Zuge des Abwickelns des Strangmaterials von der Spule und bei der Applikation des Strangmaterials: Da die Länge der fehlerfreien Nutzabschnitte bekannt ist, können von dem abgespulten Strangmaterial nacheinander mehrere fehlerfreie Längenabschnitte variabler Länge abgelängt und appliziert werden, solange, bis der Nutzabschnitt verbraucht ist. Ist das Ende dieses Nutzabschnitts erreicht, dann wird ein Strangmaterialstück vorbekannter Länge (entsprechend dem Zwischenabschnitt, der fehlerbehaftet sein kann) herausgeschnitten; anschließend steht ein weiterer fehlerfreier Nutzabschnitt bereit. Es besteht somit beim Fahrzeughersteller keine Notwendigkeit, das Strangmaterial auf Fehler zu prüfen - aus der Absolutlänge des bisher abgespulten Strangmaterials einer Spule kann der Fahrzeughersteller eindeutig entscheiden, ob der momentan zur Verarbeitung anstehende Längenabschnitt fehlerfrei ist (d.h. einem Nutzabschnitt zuzuordnen ist) oder fehlerbehaftet sein kann und daher abgetrennt und ausgesondert werden muss (d.h. einem Zwischenabschnitt zuzuordnen ist). Da die Prüfung des Strangmaterials beim Fahrzeughersteller entfällt, kann die zugehörige Prüfeinrichtung eingespart werden. Weiterhin sind die Absolutlängen der Nutz- und der Zwischenabschnitte bekannt, so dass die Anfangs- und Endpunkte dieser Nutz- bzw. Zwischenabschnitte nicht markiert zu werden brauchen. Auf diese Weise können beim Hersteller des Strangmaterials Kosten gespart werden.

Mit Hilfe des erfindungsgemäßen Verfahrens wird der an dem Bauteil zu montierende Längenabschnitt eines von einer Spule abgespulten Strangprofils also ohne weitere Prüfung an dem Bauteil appliziert. Ebenso werden aus dem von der Spule abgespulten Strangprofil in regelmäßigen Abständen Zwischenabschnitte herausgeschnitten und als Abfall ausgesondert, ohne dass diese Zwischenabschnitte auf Fehler etc. geprüft werden.

Die Überprüfung des Strangmaterials zeitlich vor dem Abwickeln der Spule und insbesondere zeitlich vor dem Aufwickeln auf diese auf den vorbestimmten Zustand birgt weiterhin den Vorteil, dass dieses Überprüfen nicht mehr während oder bei der Montage beispielsweise bei einem Hersteller des Bauteils erfolgen muss, sondern in vorgelagerten Prozessen beispielsweise bei einem Lieferanten des Strangmaterials erfolgen kann. Dies wirkt sich günstig auf geringe Montagekosten aus.

In einer vorteilhaften Ausführungsform der Erfindung wird das Strangmaterial vor dem Abwickeln von der Spule, vorzugsweise bereits vor dem Aufwickeln des Strangmaterials auf diese, mit einem periodischen Kalibrationsmuster versehen. Dieses Kalibrationsmuster dient dazu, einen absoluten Längenmaßstab entlang des Strangmaterials darzustellen, so dass anhand des Kalibrationsmusters ein Abgleich der bereits abgespulten Länge des Strangmaterials erfolgen kann und erkannt werden kann, wann das Ende eines Nutzbereiches bzw. eines Zwischenbereiches erreicht wird. Dies ist insofern vorteilhaft, als das Strangmaterial in der Regel beim Hersteller in einem bestimmten, gegebenenfalls willkürlichen und nicht konstanten Dehnungszustand insbesondere in Längserstreckungsrichtung des Strangmaterials auf die Spule aufgewickelt wird und anschließend beim Fahrzeughersteller im Zuge der Dichtungsapplikation ggf. in einem willkürlichen und nicht konstanten Dehnungszustand zunächst abgerollt und dann montiert wird. Der Dehnungszustand, unter dem das Strangmaterial auf die Spule aufgerollt wird, wird sich daher in der Regel von dem Dehnungszustand unterscheiden, in dem das Strangmaterial appliziert wird. Das Kalibrationsmuster kann als Absolutmessstab verwendet werden, um von diesen voneinander unterschiedlichen Dehnungszuständen verursachte Längendifferenzen des Strangmaterials zu kompensieren.

Beim Abwickeln des Strangmaterials von der Spule kann beispielsweise mit Hilfe eines mitlaufenden Zählers, unter Erfassung des periodischen Kalibrationsmusters, die Länge des bereits abgewickelten Strangmaterials aufaddiert werden. Ist das Ende eines Nutzabschnitts erreicht, so wird der sich an den Nutzabschnitt anschließende Zwischenabschnitt von dem Strangmaterial abgetrennt und der Zähler in einen Ausgangszustand versetzt, wobei er beispielsweise auf Null gesetzt wird, um somit bei dem sich anschließenden, zu montierenden Längenabschnitt wieder eine Absolutreferenz zu haben. Alternativ kann der Zähler die Gesamtlänge des auf der Spule befindlichen Strangmaterials aufaddieren, wobei jeweils bei Erreichen der (vorberechneten) Positionen der Endpunkte der Nutzabschnitte signalisiert wird, dass ein herauszuschneidender Zwischenabschnitt ansteht.

Das Kalibrationsmuster kann beispielsweise durch äquidistante, farbige Punkte, Striche oder dergleichen auf dem Strangmaterial gebildet werden. Ist das Strangprofil ein selbstklebendes Profil mit einem Klebestreifen, so kann das Kalibrationsmuster auf einem von dem Strangmaterial zu entfernenden Abreißmaterial ("Liner") angeordnet sein, der den Klebestreifen überdeckt und im Zuge der Dichtprofilmontage abgezogen wird. Weiterhin kann als Kalibrationsmuster eine unter ultraviolettem Licht sichtbare regelmäßige Markierung vorgesehen sein. Eine weitere Möglichkeit zur Realisierung des Kalibrationsmusters sind mechanische Markierungen wie Riefen, Ausnehmungen, Erhebungen oder dergleichen.

Zur Erfassung des Kalibrationsmusters kann eine optische Erfassungseinrichtung vorgesehen sein, die in einem Längenwellenbereich des für das menschliche Auge sichtbaren Lichts oder im ultravioletten Bereich die Markierung beziehungsweise das periodische Muster erfassen kann. Ebenso möglich ist, das Kalibrationsmuster mittels einer taktilen Erfassungseinrichtung zu erfassen, welche das Strangmaterial auf dessen Oberfläche abtastet und die Oberflächenbeschaffenheit und insbesondere als mechanische Markierung ausgebildete Kalibrationsmuster erfasst.

Bei dem zu montierenden Strangprofil kann es sich um ein Dichtungsprofil oder um ein Kantenschutzprofil handeln, welches beispielsweise mit der Fahrzeugkarosserie oder dem Fahrzeugbauteil verklebt und/oder über eine Steckverbindung mit diesem verbunden wird. Dabei wird beispielsweise das Strangprofil auf einen Fügeflansch der Fahrzeugkarosserie aufgesteckt. Wie bereits angedeutet, kann im Falle eines Verklebens des Strangprofils mit dem Bauteil ein so genannter Liner vorgesehen sein, welcher eine Klebestelle, insbesondere eine Kleberaupe, des Strangprofils überdeckt und vor dem Verkleben von dem Strangprofil beziehungsweise dem Strangmaterial entfernt wird.

Vorteilhafterweise werden die entsprechenden Längenabschnitte automatisiert, beispielsweise mittels eines Roboters, abgetrennt. Somit kann das Verfahren besonders schnell und kostengünstig durchgeführt werden. Ebenso günstig für eine schnelle und kostengünstige Durchführung des Verfahrens ist, wenn das Strangprofil ebenfalls automatisiert mit dem Bauteil verbunden wird. Bei dem Bauteil kann es sich dabei beispielsweise um eine Tür, eine Klappe oder dergleichen Flügelelement eines Kraftwagens handeln.

Zur Montage des Strangprofils an dem Bauteil kann ein Kopf des Roboters zur Montage des Strangprofils bevorzugt ortsfest gehalten werden, während das Bauteil beispielsweise in Form des Flügelelements robotergeführt an den Kopf vorbeigeführt wird und sich somit relativ zu dem Kopf bewegt.

Wird beispielsweise das Strangprofil auf den Fügflansch in einem Türausschnitt, Klappenausschnitt oder dergleichen einer Karosserie eines Kraftwagens aufgetragen, so wird bevorzugt die Karosserie ortsfest gehalten, während sich der Kopf des Roboters beziehungsweise der Montageeinrichtung robotergeführt entlang dem Türausschnitt, dem Klappenausschnitt oder dergleichen bewegt.

Ebenso möglich ist, dass die Montage des Strangprofils auch bei einer bewegten Karosserie durchgeführt wird, die beispielsweise mittels eines Montagebandes oder anderweitig translatorisch bewegt wird. In diesem Falle wird der Roboter beziehungsweise die Montageeinrichtung mit dem Kopf mit der Karosserie in deren Richtung mit bewegt, so dass zwischen dem Roboter und der Karosserie während der Montage keine Relativbewegungen auftreten sondern lediglich Relativbewegungen zwischen der Karosserie und dem zu montierenden Strangprofil über den Kopf des Roboters durchgeführt werden.

Weitere Vorteile, Merkmale und Einzelheiten der Erfindung ergeben sich aus der nachfolgenden Beschreibung eines bevorzugten Ausführungsbeispiels sowie anhand der Zeichnungen. Dabei zeigen
- Fig. 1: einen schematischen Ablauf eines erfindungsgemäßen Verfahrens zur Montage eines Strangmaterials an einem Bauteil einer Kraftfahrzeugs,
- Fig. 2: eine schematische Aufsicht auf ein erfindungsgemäß konfektioniertes Strangmaterial.

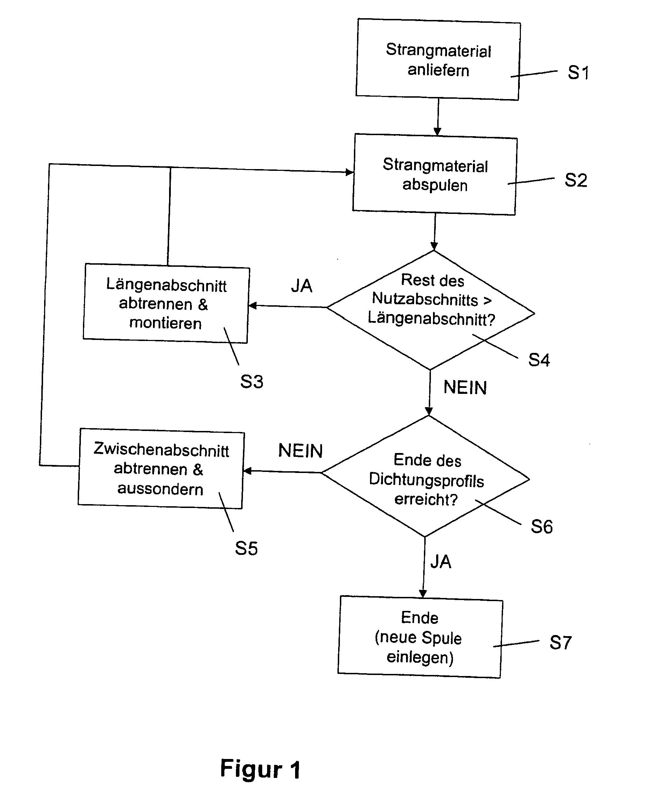

Fig. 1 zeigt ein schematisches Ablaufdiagramm eines Verfahrens 1 zur Montage eines aus einem Strangmaterial gebildeten Dichtungsprofils an einem Bauteil eines Kraftwagens, bei welchem äquidistante Längenabschnitte vorgegebener Länge des Strangmaterials von diesem periodisch abgetrennt und als Ausschuss ausgesondert werden.

In einem ersten Schritt S1 liefert ein Hersteller und Zulieferer ein als so genanntes Endlos-Dichtungsprofil ausgebildetes Strangmaterial 10 an einen Hersteller von Kraftwagen, insbesondere Personenkraftwagen.

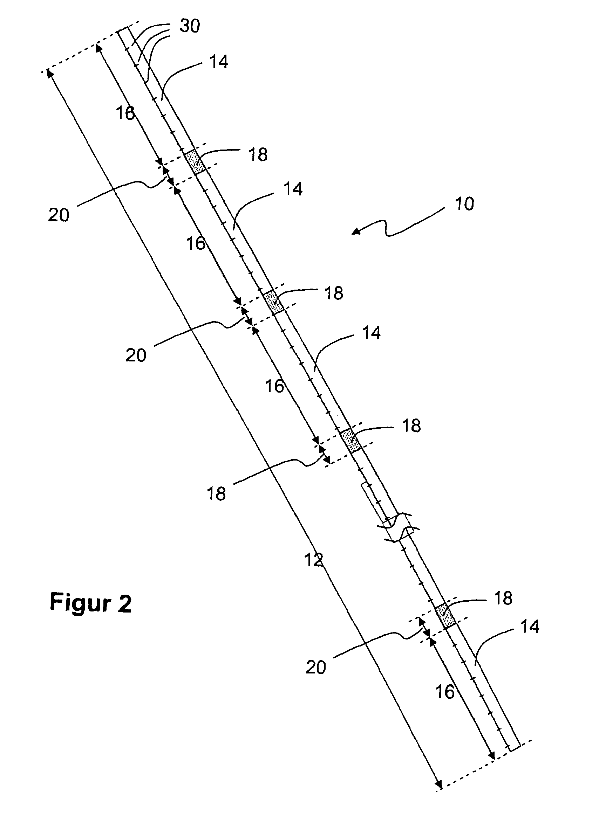

Ein Beispiel für ein vom Hersteller bereitgestelltes Strangmaterial 10 ist in Fig. 2 dargestellt; es hat eine Gesamtlänge 12 (beispielsweise von 1400 m) und weist mehrere Nutzabschnitte 14 auf, welche einen gewünschten und vorbestimmten Zustand aufweisen. Bei diesem vorbestimmten Zustand handelt es sich um vorgegebene Oberflächenbeschaffenheiten und Geometrien, die es ermöglichen, das in den Nutzabschnitten 14 vorliegende Strangmaterial bestimmungsgemäß als Dichtungsprofile (oder als Kantenschutzprofil etc.) einzusetzen. Das in den Nutzabschnitten 14 vorliegende Strangmaterial ist also so beschaffen, dass es eine gewünschte Funktion erfüllen kann (beispielsweise ein Eindringen von Wasser und Schmutz in einen Innenraum einer Karosserie des Personenkraftwagens verhindern kann). Jeder dieser fehlerfreien Nutzabschnitte 14 weist feste, vorgegebene Länge 16 (beispielsweise 100 m) auf.

In Längserstreckungsrichtung des Strangmaterials 10 ist zwischen zwei fehlerfreien Nutzabschnitten 14 jeweils ein Zwischenabschnitt 18 ebenfalls fest vorgegebener Länge 20 (beispielsweise 1 m) angeordnet, der mit den Nutzabschnitten 14 einstückig ausgebildet ist und somit die Nutzabschnitte 14 miteinander verbindet. Der Zwischenabschnitt 18 kann insbesondere auch aus dem Dichtungsprofil bestehen. Der Zwischenabschnitt 18 kann fehlerfrei sein, das heißt ebenfalls den vorbestimmten und erwünschten Zustand aufweisen; der Zwischenabschnitt 18 kann allerdings auch fehlerbehaftet sein und somit von dem erwünschten und vorgegebenen Zustand abweichen. Bei einem solchen Fehler kann es sich beispielsweise um Abweichungen seiner Oberflächenbeschaffenheit oder Oberflächengeometrie von einer gewünschten Soll-Oberflächenbeschaffenheit und Soll-Oberflächengeometrie handeln, der zur Folge haben kann, dass der Zwischenabschnitt 18 die gewünschte Dichtungsfunktion nicht erfüllt. Ein solcher Fehler kann insbesondere in Form eines Stoßes oder dergleichen vorliegen, welcher es gegebenenfalls ermöglicht, dass Wasser und Schmutz in den Innenraum der Karosserie eindringen kann.

Das Strangmaterial 10 wird bei einem Kraftfahrzeugzulieferer in der schematisch in Fig. 2 gezeigten Weise konfektioniert, auf eine Rolle oder Spule aufgewickelt und an einen Kraftfahrzeug-Hersteller geliefert (Prozessschritt S1).

Beim Kraftfahrzeug-Hersteller schließt sich daran eine Applikation von Dichtungsprofil-Längenabschnitten an Fahrzeugbauteilen bzw. Fahrzeugkarosserien an. Dabei wird in einem Schritt S2 das vom Zulieferer bereitgestellte Strangmaterials 10 von der Rolle abgespult und einer so genannten Applikationseinrichtung zugeführt, in der - vorzugsweise robotergeführt - die das Strangmaterial 10 auf die Fahrzeugbauteile bzw. Fahrzeugkarosserien aufgebracht wird.

In der Applikationseinrichtung wird in einem Schritt S3 ein entsprechend der Bauvariante der jeweiligen Karosserie benötigter Längenabschnitt des Strangmaterials 10 abgelängt und an dem entsprechenden Fahrzeugbauteil (beispielsweise Fahrzeugtür, Fahrzeugklappe oder Türausschnitt einer von Karosserie) montiert. Dabei wird der abgelängte Längenabschnitt auf korrespondierende Fügflansche der Karosserie aufgesteckt und/oder mit dem Fahrzeugbauteil verklebt. Alternativ kann der Längenabschnitt durch Verkleben der beiden Stoßstellen zu einem Dichtungsring gefügt werden, der anschließend über eine Steckverbindung auf einen Flanschbereich der Fahrzeugkarosserie oder des Fahrzeugbauteils appliziert wird.

Alternativ kann im Montageschritt S3 das Endlos-Strangmaterial zunächst auf die Karosserie (bzw. das Karosseriebauteil) appliziert werden. Mit Hilfe eines Sensors wird das Erreichen des Anfangspunkts erkannt (zu dem auf den gesamten Türausschnitt bzw. auf die gesamte Außenkontur des Bauteils umlaufend Strangmaterial appliziert wurde). Dann wird das Strangmaterial durchschnitten und die definierte abgeschnittene Restlänge appliziert.

Unabhängig davon, auf welche Weise das Strangmaterial auf die Karosserie bzw. das Karosseriebauteil aufgebracht wird, ist es wichtig, dass der Längenabschnitt, der in dem Fahrzeug verbaut wird, fehlerfrei ist. Um dies zu gewährleisten, wird zur Herstellung der Längenabschnitte nur Dichtungsprofil aus den Nutzabschnitten 14 des Strangmaterials 10 verwendet, denn es ist bekannt, dass diese Nutzabschnitte 14 keine Fehler aufweisen. Von einer frischen Rolle mit Strangmaterial 10 werden daher zunächst nacheinander mehrere Längenabschnitte abgelängt und verbaut, solange, bis das Ende des fehlerfreien Nutzabschnitts 14 erreicht ist.

Die bereits verbrauchte Länge des Nutzabschnitts 14 kann dabei beispielsweise mit Hilfe eines mitlaufenden Zählers ermittelt werden. Dieser Zähler liefert aber nur dann verlässliche Informationen über die verbrauchte Länge des Nutzabschnitts 14, wenn der Dehnungszustand des abgespulten Strangmaterials genau dem Dehnungszustand entspricht, in dem das Strangmaterial beim Zulieferer in der in Figur 1 gezeigten Weise konfektioniert wurde. Wird das Strangmaterial beim Fahrzeughersteller beispielsweise unter einem größeren Zug von der Rolle abgespult, als es beim Lieferanten aufgespult wurde, so kann es bei der Längenmessung zu Divergenzen zwischen dem Zählerstand und der "wirklichen" Position kommen. Zum solche Ungenauigkeiten zu vermeiden, wird das Strangmaterial 10 vorteilhafterweise beim Zulieferer mit einem periodischen Kalibrationsmuster 30 versehen (siehe Fig. 1), das beim Fahrzeughersteller mit dem Zähler erfasst wird und zur Kalibration des Zählerstandes dient. Dieses Kalibrationsmuster 30 ermöglicht also eine eindeutige Korrelation zwischen den bei der Konfektionierung des Strangmaterials 10 verwendeten Längenmaßen und den beim Fahrzeughersteller ermittelten Längenmaßen.

Vor Bereitstellung jedes neuen Längenabschnitts wird aus der Nutzlänge 16 und dem aktuellen Zählerstand berechnet, ob der neue Längenabschnitt vollständig innerhalb des Nutzabschnitts 14 liegt, so dass ausreichend fehlerfreies Strangmaterial zur Verfügung steht (Schritt S4). Ist dies nicht der Fall, ist also das Ende des Nutzabschnitts 14 erreicht, so wird in einem Schritt S5 das verbleibende Endstück des Nutzabschnitts 14 und der darauf folgende Zwischenabschnitt 18 von dem Strangmaterial 10 abgetrennt und ausgesondert. Der ausgesonderte Zwischenabschnitt 18 kann fehlerhaft oder auch fehlerfrei sein; dies wird bei dem Verfahren 1 nicht geprüft; unabhängig von der Qualität des Zwischenabschnitts 18 wird dieser abgetrennt und als Abfall entsorgt.

Nach Abtrennen des Zwischenabschnitts (Schritt S5) wird von dem nächsten, sich an den Zwischenabschnitt 18 anschließenden Nutzabschnitt 14 der benötigte Längenabschnitt - entsprechend der Bauweise des Karosserietyps - auf die geschilderte Art und Weise von der Rolle abgespult (Schritt S2), abgelängt und an dem Fahrzeug bzw. Bauteil montiert (Schritt S3). Dies wird wieder so lange durchgeführt, bis das Ende dieses fehlerfreien Nutzabschnitts 14 erreicht ist (Schritt S4), woran sich wieder das Abtrennen und das Aussondern des nächsten, sich an diesen Nutzabschnitt 14 anschließenden Zwischenabschnitt 18 anschließt (Schritt S5). Diese Vorgänge werden so oft wiederholt, bis das Endlos-Dichtungsprofil 10 vollständig von der Rolle abgespult ist (Schritt S6) und eine weitere Spule mit auf diesem aufgewickelten Endlos-Dichtungsprofil 10 benötigt wird (Schritt S7).

## Patentansprüche

1. Verfahren (1) zur Montage von aus einem Strangmaterial (10) gebildeten Dichtungsprofilen, Kantenschutzprofilen oder dergleichen an Fahrzeugkarosserien oder Fahrzeugbauteilen, bei welchem das Strangmaterial von einer Spule abgewickelt, Längenabschnitte des Strangmaterials (10) sequentiell von dem abgewickelten Strangmaterial abgetrennt und als Dichtungsprofile, Kantenschutzprofile oder dergleichen an den Fahrzeugkarosserien oder den Fahrzeugbauteilen montiert werden, **dadurch gekennzeichnet, dass**
- das Strangmaterial (10) vor dem Aufwickeln auf die Spule in einer solchen Weise hergerichtet wird, dass das Strangmaterial (10) fehlerfreie Nutzabschnitten (14) einer vorgegebenen Nutzlänge (16) umfasst, zwischen denen Zwischenabschnitte (18) einer vorgegebenen Zwischenlänge (20) angeordnet sind, und dass
- die Zwischenabschnitte (18) im Zuge der Montage der Dichtungsprofile, Kantenschutzprofile etc. aus dem Strangmaterial (10) herausgetrennt und als Ausschuss ausgesondert werden.

2. Verfahren nach Anspruch 1,
**dadurch gekennzeichnet, dass**
das als Dichtungsprofil, Kantenschutzprofil oder dergleichen zu montierende Strangmaterial (10) zeitlich vor dem Abwickeln von der Spule, insbesondere zeitlich vor einem Aufwickeln des Strangmaterials (10) auf die Spule, mit einem periodischen Kalibrationsmuster (30) versehen wird.

3. Verfahren nach Anspruch 2,
**dadurch gekennzeichnet, dass**
das Kalibrationsmuster (30) des Strangmaterials (10) durch äquidistante farbige und/oder unter ultraviolettem Licht sichtbare Muster, Punkte, Striche oder dergleichen gebildet wird.

4. Verfahren nach einem der Ansprüche 2 oder 3,
**dadurch gekennzeichnet, dass**
das Kalibrationsmuster (30) des Strangmaterials (10) auf einem eine Klebestelle des Strangmaterials überdeckenden Abreißmaterial auf- oder eingebracht ist.

5. Verfahren nach einem der Ansprüche 2 bis 4,
**dadurch gekennzeichnet, dass**
das Kalibrationsmuster (30) des Strangmaterials (10) durch mechanische Markierungen, insbesondere Oberflächenunebenheiten, Ausnehmungen oder dergleichen Oberflächenbeschaffenheiten gebildet wird.

6. Verfahren nach einem der Ansprüche 2 bis 5,
**dadurch gekennzeichnet, dass**
das Kalibrationsmuster des Strangmaterials (10) mittels einer optischen und/oder taktilen Erfassungseinrichtung erfasst wird.

7. Verfahren nach einem der vorhergehenden Ansprüche,
**dadurch gekennzeichnet, dass**
das Dichtungsprofil, Kantenschutzprofil oder dergleichen mit der Fahrzeugkarosserie oder dem Fahrzeugbauteil verklebt und/oder über wenigstens eine Steckverbindung mit der Fahrzeugkarosserie oder dem Fahrzeugbauteil verbunden wird.

8. Verfahren nach Anspruch 7,
**dadurch gekennzeichnet, dass**
das vom Dichtungsprofil, Kantenschutzprofil oder dergleichen ein Längenabschnitt abgetrennt, an den Stoßstellen verklebt und der so entstandene Dichtungsring über eine Steckverbindung mit der Fahrzeugkarosserie oder dem Fahrzeugbauteil verbunden wird.

## Claims

1. Method (1) for installing profiled sealing sections, profiled edge-protection sections or similar sections, made out of an extruded profile material (10), onto automobile bodies or automobile parts in which the extruded profiled material is unrolled from a reel, length sections of the extruded profiled material (10) are sequentially cut from the reel of material and are installed as sealing profile, edge-protection profile or similar on vehicle bodies or body parts **characterised in that**
- before being wound onto the reel, the extruded profiled material (10) is prepared so that the extruded profiled material (10) comprises flawless usable sections (14) having a prescribed usable length (16), between which there are intermediate sections (18) of a prescribed intermediate length (20), and that
- as the sealing profile, the profiled edge-protection, etc. made of the extruded profiled material (10) is being installed, the intermediate sections (18) are cut out and discarded as scrap.

2. Method according to claim 1,
**characterised in that**
before the extruded profiled material (10) to be installed as sealing profile, profiled edge-protection or similar section is unwound from the reel, in particular before the extruded profiled material (10) is wound onto the reel, it is provided with a periodic calibration pattern (30).

3. Method according to claim 2,
**characterised in that**
the calibration pattern (30) of the extruded profiled material (10) is made up of an arrangement of equidistantly positioned markings, dots or lines or the like that are coloured and/or visible under ultra-violet light.

4. Method according to one of the claims 2 or 3,
**characterised in that**
the calibration pattern (30) of the extruded profiled material (10) is applied to a detachable material that covers an adhesion point of the extruded profiled material.

5. Method according to one of the claims 2 to 4,
**characterised in that**
the calibration pattern (30) of the extruded profiled material (10) is formed by a mechanical marking, in particular by irregularities in the outer surface, indentations or similar features in the outer surface.

6. Method according to one of the claims 2 to 5,
**characterised in that**
the calibration pattern of the extruded profiled material (10) is identified by means of an optical and/or tactile detection device.

7. Method according to one of the preceding claims, **characterised in that**
the sealing profile, profiled edge-protection section or similar section is attached to the vehicle body or vehicle part by adhesion and/or by at least one push-on connection to the vehicle body or vehicle part.

8. Method according to claim 7,
**characterised in that**
a length section is cut from the sealing profile, profiled edge-protection or similar section, is glued at the join and the sealing ring thus formed is attached to the vehicle body or vehicle part by a push-on connection.

## Revendications

1. Procédé (1) pour le montage de profilés d'étanchéité, de profilés de protection pour arêtes, ou similaires, réalisés à partir d'un matériau extrudé (10), sur des carrosseries ou sur des composants de véhicules automobiles, dans lequel le matériau extrudé est déroulé d'une bobine, des tronçons de longueur du matériau extrudé (10) sont séparés de manière séquentielle depuis le matériau extrudé déroulé et sont montés à titre de profilés d'étanchéité, de profilés de protection pour arêtes, ou similaires sur les carrosseries ou sur les composants de véhicules automobiles, **caractérisé en ce que**
- le matériau extrudé (10) est disposé, avant d'être enroulé sur la bobine, d'une manière telle que le matériau extrudé (10) comporte des tronçons utiles (14) dépourvus de défaut avec une longueur utile (16) prédéterminée, entre lesquels sont agencés des tronçons intermédiaires (18) avec une longueur intermédiaire (20) prédéterminée, et
- les tronçons intermédiaires (18) sont séparés au cours du montage des profilés d'étanchéité, des profilés de protection pour arêtes, etc., à partir du matériau extrudé (10) et sont rejetés sous forme de déchets.

2. Procédé selon la revendication 1,
**caractérisé en ce que**
le matériau extrudé (10) à monter à titre de profilé d'étanchéité, de profilé de protection pour arête, ou similaire, est doté, temporellement avant d'être déroulé de la bobine, en particulier temporellement avant un enroulement du matériau extrudé (10) sur la bobine, d'un motif de calibrage périodique (30).

3. Procédé selon la revendication 2,
**caractérisé en ce**
**que** le motif de calibrage (30) du matériau extrudé (10) est formé par des motifs, des points, des traits ou similaires de couleur équidistants et/ou visibles sous lumière ultraviolette.

4. Procédé selon l'une des revendications 2 ou 3,
**caractérisé en ce que**
le motif de calibrage (30) du matériau extrudé (10) est appliqué ou intégré sur un matériau à déchirer qui recouvre un emplacement de collage du matériau extrudé.

5. Procédé selon l'une des revendications 2 à 4,
**caractérisé en ce que**
le motif de calibrage (30) du matériau extrudé (10) est formé par des marquages mécaniques, en particulier des irrégularités de surface, des évidements ou des propriétés de surface analogues.

6. Procédé selon l'une des revendications 2 à 5,
**caractérisé en ce que**
le motif de calibrage du matériau extrudé (10) est détecté au moyen d'un dispositif de détection optique et/ou tactile.

7. Procédé selon l'une des revendications précédentes,
**caractérisé en ce que**
le profilé d'étanchéité, le profilé de protection pour arêtes, ou similaires, est collé sur la carrosserie ou sur le composant du véhicule et/ou relié à la carrosserie ou au composant du véhicule via au moins une liaison à enfichage.

8. Procédé selon la revendication 7,
**caractérisé en ce que**
l'on sépare du profilé d'étanchéité, du profilé de protection pour arêtes, ou similaire, un tronçon de longueur, **en ce qu'**on le colle aux emplacements d'aboutement, et **en ce que** l'on relie la bague d'étanchéité ainsi obtenue à la carrosserie ou au composant du véhicule via une liaison à enfichage.
